# EUROPEAN PATENT SPECIFICATION

(11) **EP 2 904 907 B1**
(45) Date of publication and mention of the grant of the patent: **14.06.2017**
(21) Application number: 15154810.4
(22) Date of filing: 09.02.2010
(51) Int. Cl.: A23C 20/02, A23C 20/00, A23L 13/40, A23L 13/60

(54) **Emulsion-like compositions**
Emulsionsartige Zusammensetzungen
Compositions en forme d'émulsion

(30) Priority: 10.02.2009 EP 09001812
(43) Date of publication of application: 12.08.2015
(62) Divisional of application: 10703814.3
(73) Proprietor: Cargill, Incorporated, Wayzata, MN 55391 (US)
(72) Inventor: Barey, Philippe Christophe Michel Marie, 50690 Saint Martin le Gréard (FR); Bouron, Fabien, 50180 St Gilles (FR)
(74) Representative: Morariu Radu, Mihai Dorin

(56) References cited:
- EP-A- 0 363 741
- EP-A- 1 201 134
- WO-A-94/28741
- WO-A-2004/069877
- WO-A-2008/014041
- CN-A- 101 336 905
- GB-A- 1 575 816
- US-A- 4 035 235
- US-A1- 2003 017 242
- US-A1- 2004 067 560
- YAO WEIRONG ET AL: "ADSORBENT CHARACTERISTICS OF POROUS STARCH", STARKE - STARCH, WILEY-VCH VERLAG, WEINHEIM, DE, vol. 54, no. 6, 1 June 2002 (2002-06-01), pages 260-263, XP001116392, ISSN: 0038-9056

## Description

### FIELD OF THE INVENTION

The present invention relates to edible emulsion-like compositions especially emulsion-like compositions without emulsion stabilizing aids. This invention also relates to a process for manufacturing said emulsion-like composition and the invention further relates to the use of porous starch, in the manufacture of edible emulsion-like compositions.

### BACKGROUND OF THE INVENTION

Texture and particularly viscosity or sensorial consistency of emulsion products is often correlated with protein content. For Instance In fermented dairy products, dairy proteins enable the formation of acidified gels. Since dairy protein is one of the most expensive components in cheese products, manufacturers have always tried to reduce their content. The same applies to the meat industry where reducing the protein content is a clear challenge in the manufacture of e.g. ham or pâté.

Different attempts have been made in the art to reduce said protein content like optimizing the cultures, the processing conditions or Including stabilizers system mainly composed of modified starches, gelatin and/or low methoxyl pectins.

This led to the production of for example processed cheese, imitation cheeses, processed ham, meat analogues. These products all have a composition close to the traditional ones but contain emulsion stabilizing aids enabling a protein reduction without detrimental modification of the sensory attributes of a traditional product.

For example, imitation cheeses or cheese analogues allow the manufacturers to substitute components that are normally used In the traditional production of traditional cheeses; nevertheless a certain amount of protein, and particularly casein, is needed to form a network strong enough to mimic the consistency and texture of a conventional cheese and to avoid syneresis problems. Moreover, the protein reduction Is often linked to an increase of the emulsifier content to retain the suitable consistency of an emulsion.

EP 1 201 134 pertains to the casein replacement in cheese-like products; however, the caseins are replaced by whey protein or soy protein and mixtures thereof.

US 2004/0191363 also pertains to the replacement of dairy proteins in imitation cheese; this time the dairy protein are replaced by soy protein. US 2003/017242 pertains to a packaged imitation cheese with a reduced protein content. After that, several documents aim at the inclusion of different types of starches in order to improve imitation cheese quality. US 4,695,475 uses jet-cooked or spray-dried starches. US 5,807,601 involves a combination of granular starch and hydrocolloids. EP 0 363 741 proposes to replace caseinate with enzymatically debranched starches; and finally Canadian patent application 2,161,713 Involves waxy starch for manufacturing imitation cheese containing natural cheese Ingredients. In all the documents mentioned herein some emulsifiers are added to further mimic traditional cheeses attributes and obtain the required consistency.

Despite the different solutions that have been proposed In the art, there is still a need for edible emulsion-like compositions substantially free of emulsion stabilizing aids while keeping the original features of smoothness, shape, consistency, feel and liquid retention of a traditional emulsion. Another need Is to avoid the use of gelatin which Is not well perceived by consumers. The present invention fulfils these needs.

### SUMMARY OF THE INVENTION

The present Invention concerns an edible emulsion-like composition comprising water, edible lipids and a porous starch. Said emulsion-like composition preferably does not contain emulsifiers. Even more preferably, the present emulsion-like composition preferably does not contain any emulsion stabilizing aids.

Depending on the final cheese to be manufactured and especially its water content, the present emulsion-like composition may contain hydrocolloids.

Another object of the present invention is an imitation cheese comprising:
- From 20 to 75 wt% water,
- from 0.5 to 40 wt% porous starch
- from 1 to 60 wt% edible lipid

A further object of the invention is a method for manufacturing emulsion-like compositions comprising the steps of:
a. Melting edible lipids,
b. Mixing the dry Ingredients into the melted lipids,
c. Adding water,
d. Mixing

Additionally, a heat treatment might be useful especially to increase the shelf life of the emulsion-like composition and solubilise the carbohydrate component and hydrocolloids.

In a yet further aspect, a packaged Imitation cheese may be produced according to the present invention.

In an additional object, the present Invention aims at the use of porous starch as a protein and emulsifier substitute.

Finally in an object, the present invention relates to the use of porous starch for manufacturing an edible imitation-like composition without emulsion stabilizing aids.

### DETAILED DESCRIPTION OF THE INVENTION

All the percentages mentioned In the present application are percentages by weight of the total composition.

The term "edible emulsion-like composition" in the present Invention encompasses any processed food or food intermediate that mimics traditional food emulsion. Example of a traditional edible emulsion is cheese; in the present invention, the edible emulsion-like composition will be an Imitation cheese or a cheese analogue. In the case of traditional ham, the emulsion-like composition is a processed ham. For traditional paté, the emulsion-like composition is an imitation paté. From a more general point of view, the Inventive equivalent of the traditional food will look like the traditional food emulsion, it will have a similar taste, a similar mouthfeel and a similar processing behaviour. Nevertheless, the composition of the emulsion-like composition will be different as it contains at least a carbohydrate component which allows a reduction or even a suppression of emulsion stabilization aids.

When used In the present document, the term "emulsion stabilizing aids" encompasses emulsifiers, melting salts, dairy ingredients or proteins and mixtures thereof. Protein here is preferably vegetable protein. In the context of the present document, "without emulsion stabilizing aids" means that the emulsion-like composition has a reduced content In such aids compared to a conventional product, preferably their content is reduced by at least 30 %, more preferably at least 50%, even more preferably at least 75% and most preferably the emulsion-like composition Is free of such aids.

An essential component of the emulsion-like composition is the carbohydrate component. Pregelatinized starches are known to the skilled person and can be manufactured by any method from the art. Porous starch according to the present invention is obtained by enzymatic treatment; indeed, granular starch can be made porous by treatment with amylolytic enzymes. The mode of enzymatic attack and the type of pores being made are highly dependent on the starch raw material and the enzyme source. Both alpha-amylases and glucoamylases can be used In the preparation of porous starch; however, the mode of attack is different. This difference is beneficial when a fast degradation of the granular starch is desired. Blends of enzymes that have synergistic activities on granular starch have been disclosed in the following patents applications US 2005/0042737, US 2005/0158839 and US 2005/0266543. These blends are suitable to be used in the preparation of the present porous starch. The botanical origin of the starch is also having an effect on rate and extent of alpha-amylase and glucoamylase hydrolysis. Suitable sources to produce the porous starch according to the present Invention are wheat, maize, pea, potato, barley, tapioca, rice, sago or sorghum and mixtures thereof. Preferably the source Is rice, barley, maize or tapioca and mixtures thereof. More preferably, the source is waxy maize starch or regular com starch and mixtures thereof. The porous starch according to the present invention can be manufactured according to US 2003/0202996.

In a preferred embodiment, agglomerated porous starch is used in the present invention. The agglomeration is done by conventional methods known to the skilled person. Such method can be found for example in US 5,486,507 and US 5,726,161 to Whistler or in the journal articles Food technology July 1994; pg 104-105 (Whistler): Spherical aggregates of starch granules as flavor carriers.

The present invention further contains an edible lipid source; any lipid might be used. Preferably, the lipids are coming from vegetable sources and might be hydrogenated. In a highly preferred embodiment, vegetable oil is used.

In a preferred embodiment, the emulsion-like composition according to the present invention does not comprise any emulsifiers. The term emulsifiers herein is intended to refer to emulsifiers like or even emulsifiers salts such as mono-diglycerides, esterified monodiglycerides, lactic acid esters of mono- and diglycerides, diacetyltartaric acid esters of mono- and diglycerides, citric acid esters of mono- and diglycerides, or lecithins, and mixtures thereof.

In a preferred embodiment, the emulsion-like composition according to the present invention does not comprise any melting salts. The term melting salts herein is intended to refer to e.g. potassium citrates, mono-, di-, and tri- calcium citrates, sodium orthophosphates, potassium orthophosphates, diphosphates, triphosphates, or polyphosphates and mixtures thereof.

In a preferred embodiment, the emulsion-like composition according to the present invention does not comprise any dairy ingredients. The term dairy ingredients herein is Intended to refer to for example caseins, whey proteins and whey derivatives, lactoglobulin, milk, skimmed milk, cream, buttermilk or milk concentrates, and mixtures thereof.

In a preferred embodiment, the emulsion-like composition according to the present invention does not comprise any protein. The term protein herein is Intended to refer to for example soy protein, barley protein, wheat protein, or oat protein and the like and mixtures thereof.

Alternatively, the emulsion-like composition might contain protein. Any edible source of protein may be used; said protein will help cohesiveness and reduce syneresis. In a preferred embodiment the present invention contains less than 10% protein, more preferably less than 5%, even more preferably less than 2%, most preferably no dairy protein, and the most preferred embodiment does not contain any protein.

The emulsion-like composition of the present invention also preferably contains flavoring agents suitable to impart the required flavor to the textured emulsion. The person skilled In the art will be able to determine the type and content of flavor needed, for example when the manufacture of parmesan is Intended, a commercial parmesan-like flavor should be added. Natural or artifical flavors might be included; it can be envisaged to include Enzymatically Modified Dairy ingredients (EMDI); indeed, such flavoring agents are useful in imparting an aroma that mimic the one of the same "conventional cheese". It has to be noted that even if EMDI do contain some dairy ingredients, their addition are just for flavoring purposes and they do not have any texturizing properties. EMDI such as the ones disclosed in EP 1 915 913 are suitable to be included in the present invention.

In a preferred embodiment, some hydrocolloids might be included in the formulation of the present imitation cheese. Said hydrocolloids will allow a better control of the final texture and/or syneresis of the imitation cheese. The hydrocolloids to be included In the present invention are chosen from the group consisting of: carrageenans, galactomannans, edible gums, pectins, n octenylsuccinated starches, native starches, modified starches, pregelatinised starch, alginates, agar-agar, pectin, xanthan, or cellulosic derivatives, and mixtures thereof. Preferably the added hydrocolloids are carrageenan, n-octenylsuccinated starch, or galactomanans, and mixtures thereof. In a most preferred embodiment the added hydrocolloids are carrageenan and guar gum.

In a preferred embodiment the emulsion-like composition according to the present invention contains:
- From 20 to 75 wt% water,
- from 0.5 to 40 wt% porous starch
- from 1 to 60 wt% edible lipids
- from 0 to 5 wt% carrageenan
- from 0 to 5 wt% galactomaman
- from 0 to 5 wt% protein
- from 0 to 5 wt% melting salts
- from 0 to 2 wt% emulsifiers

In an embodiment, the present invention relate to an imitation cheese, which is typically prepared from water, edible lipids, porous starch(es), typical cheese additives such as natural and artificial flavorings, salts (sodium chloride and/or other salts), acids, colors stabilizers and preservatives. Imitation cheeses referred herein include high-moisture content cheeses such as cream cheese, blue cheese and mozzarella; medium-moisture cheeses, such as cheddar and provolone; low moisture cheeses, such as romano and parmesan; and pasteurized processed cheeses such as American cheese, cheese spreads and cheese products. These imitation cheeses provide the flavor and functionality of traditional cheese at a reduced cost and, in addition, are lower in cholesterol when the animal fat is replaced by vegetable fat.

The present embodiment particularly concerns an imitation cheese comprising from 20% to 75% water, from 0.6% to 40% porous starch and from 1 % to 60% of edible lipids.

A preferred version of the present embodiment comprises from 30% to 65% water more preferably from 40% to 60%, even more preferably about 55%. Porous starch is preferably present in an amount of from 5 to 30%, more preferably from 10% to 20%. Edible lipids are preferably present in an amount of from 15% to 30%, more preferably from 20% to 25%.

Also part of the present invention is an imitation cheese comprising:
- From 20 to 75 wt% water,
- from 5 to 30 wt% porous starch
- from 1 to 60 wt% vegetable oil
- from 0 to 15 wt% n-octenyl succinated starch
- from 0 to 5 wt% carrageenan
- from 0 to 5 wt% galactomaman
- from 0 to 5 wt% protein
- from 0 to 5 wt% melting salts
- from 0 to 2 wt% emulsifiers

A packaged imitation cheese may be produced according to the present invention.

In a further object, the present invention concerns a method for manufacturing an emulsion-like composition comprising the steps of melting the edible lipids by increasing the temperature above the melting point of the material used. This step Is not necessary when vegetable oil is used as a starting material. After that, the other, preferably dry, ingredients are mixed into the liquid edible lipids. Then, the desired amount of water Is added to form a slurry. This amount varies depending on the type of emulsion to be manufactured. Such addition can be determined by the person skilled in the art. Finally, the slurry is blended to form the emulsion-like composition.

The dry ingredients are at least the carbohydrate component; then depending on the recipe optionally hydrocolloids, flavoring agents, salts, edible acids, or protein and mixtures thereof may be added.

Some further steps may optionally be necessary depending on the final application and the wishes of the consumer; indeed, for high moisture Imitation cheese, it is advisable to pasteurize or sterilize the imitation cheese. Another step may be the packaging of the imitation cheese; indeed said imitation cheese may be poured directly into its package, this method known from the skilled artisan is usually called hot-packaging and allows the heat-treatment of the packaging as the edible product is poured before cooling. A further cooling step is generally necessary.

In yet a further object of the invention, the use of porous starch as a protein substitute is also part of the present Invention. As It has been shown herein, emulsion-like compositions with low content or even no protein can be manufactured when porous starch Is used. The use of porous starch as an emulsifier substitute is also part of the present invention. Finally, the use of porous starch for manufacturing an imitation cheese without dairy ingredients is encompassed in the present invention.

The invention is further defined by reference to the following examples describing in detail the preparation of the present invention. The invention described and claimed herein is not to be limited In scope by the specific embodiments herein disclosed, since these embodiments are only intended as illustrations of several aspects of the Invention. Any equivalent embodiments are intended to be within the scope of this invention. indeed, various modifications of the Invention in addition to those shown and described herein will become apparent to those skilled In the art from the foregoing description. Such modifications are also intended to fall within the scope of the appended claims.

### EXAMPLES

### Example 1: Preparation of a porous starch suitable to be included into the present emulsion-like composition:

Waxy corn starch was dispersed in a citrate buffer of pH 4.6 at a 20% concentration of starch dry solids. The slurry was reacted with an amyloglucosidase A 3042 from Sigma. The enzyme dosage was 0.1 wt% on starch and the reaction was allowed to run at 55 °C, a pH of 4.6 and for 24 hours.

The reaction was stopped by inactivation of the enzyme by holding the slurry for 10 minutes at a pH below 2. After pH adjustment to 5.5, the starch was filtered or centrifuged and the cake washed and dried.

In an alternative, Stargen001, an enzyme cocktail from Genencor, was a good alternative enzyme system to make porous starch. This enzyme had a pH optimum around 3.

### Example 2: Imitation cheese, comparative example:

pH of the standard and inventive composition was about 5.7.

| FORMULA: | Standard recipe | 1 | 2 | 3 | 4 |
|---|---|---|---|---|---|
| Water | 45.5 | 60.7 | 56.2 | 56.2 | 56.2 |
| Sodium caseinates | 14 | 2.5 | | | |
| Hydrogenated palm kem oil | | | | 20 | |
| Hydrogenated coco oil | 25 | 20 | 20 | | 20 |
| Native potato starch | 11 | | | | |
| Porous starch, pregelatinised starch or maltodextrins | | 10 | 15 | 15 | 15 |
| N-osa Starch (waxy, maize, Cargill) | | 5.3 | 5.3 | 5.3 | 5.3 |
| Guar 3500 | | | | | 1 |
| Locust bean gum (Viscogum BE, Cargill) | | | 1 | 1 | |
| Carrageenan (Satlagel ACH 121, Cargill) | 1.5 | 1 | 2 | 2 | 2 |
| Melting salts | 2.5 | | | | |
| Citric Acid | 0.05 | 0.05 | 0.05 | 0.05 | 0.05 |
| Beta carotene | 0.05 | 0.05 | 0.05 | 0.05 | 0.05 |
| Salt | 0.4 | 0.4 | 0.4 | 0.4 | 0.4 |
| TOTAL : | 100 | 100 | 100 | 100 | 100 |

Imitation cheese for the prior art (Standard): Standard recipe for an imitation cheese with 14 % of proteins sodium caseinates or Rennet casein, stabilization with native potato starch and carrageenan.

The firmness of the Imitation cheese was measure using a texture analyser TAXT2i and a finger probe of ½ Inch. The firmness wass measured by the force at 4mm and was expressed In grams.

On the standard recipe the Firmness was about 2000 gr. The other noticeable characteristic was the shredability which equalled to 89 to 90%.

Comparing Standard & recipe 1: Recipe 1 was an imitation cheese according to the present Invention with a reduced protein content. Porous starch was used to substitute part of the protein (82% reduction) and allow a stable emulsion. In this recipe, a combination of porous starch, n-osa starch and a carrageenan was used. The main characteristics of penetrometry and shredability were very similar to the standard with around 2000 gr of penetrometry measurement and a shredability of 90%

Comparing Standard & recipe 2: In recipe 2 all dairy ingredients, protein and melting salts were removed. Porous starch substituted fully the protein, allowing a stable emulsion-like composition. Thus, a protein and emulsifier free composition according to the present Invention was achieved. An addition of locust bean gum was useful to reduce syneresis. The main characteristics of penetrometry and shredability were again nearly the same.

Comparing Recipe 2 & recipe 3: After having removing all protein and melting salts, another vegetable lipid source was used. The characteristics of penetrometry and shredability were similar to the one of recipe 2.

Comparing Recipe 2 & recipe 4: Here, guar gum was used Instead of Locust bean gum. Again, the main characteristics of penetrometry and shredability were similar to Recipe 2.

## Claims

1. An emulsion-like composition comprising water, flavouring agents, edible lipids and a porous starch.

2. An emulsion-like composition according to claim 1 **characterized in that** it does not comprise emulsifiers.

3. An emulsion-like composition to any of the preceding claims **characterized in that** it does not comprise dairy ingredients.

4. An emulsion-like composition according to any of the preceding claims **characterized in that** it does not contain any proteins.

5. An emulsion-like composition according to any of the preceding claims further comprising hydrocol-loids.

6. An emulsion-like composition according to any of the preceding claims further comprising n-octenyl succinated starch.

7. An emulsion-like composition according to any of the preceding claims being an imitation cheese.

8. An emulsion-like composition according to any of the preceding claims being a processed ham.

9. An emulsion-like composition according to any of the preceding claims being an imitation pate.

10. An imitation cheese comprising:
- from 20 to 75 wt% water,
- from 5 to 30 wt% porous starch
- from 1 to 60 wt% vegetable oil
- from 0 to 15 wt% n-octenyl succinated starch
- from 0 to 5 wt% carrageenan
- from 0 to 5 wt% galactomanan
- from 0 to 5 wt% protein
- from 0 to 5 wt% melting salts
- from 0 to 2 wt% emulsifiers

11. A method for manufacturing the emulsion-like composition of any one of claims 1- 9 comprising the steps of:
a. obtaining edible lipids in liquid form,
b. mixing the dry ingredients into the liquid edible lipids,
c. adding water,
d. mixing

12. A method according to claim 11 further comprising a heat treatment.

13. A packaged imitation cheese according to claims 7 or 10.

14. Use of porous starch as a protein substitute.

15. Use of porous starch as an emulsifiers substitute.

16. Use of porous starch for manufacturing an emulsion-like composition according to any of claims 1 to 9.

## Patentansprüche

1. Emulsionsähnliche Zusammensetzung umfassend Wasser, Aromastoffe, essbare Lipide und eine poröse Stärke.

2. Emulsionsähnliche Zusammensetzung nach Anspruch 1, **dadurch gekennzeichnet, dass** sie keine Emulgatoren umfasst.

3. Emulsionsähnliche Zusammensetzung nach einem der vorhergehenden Ansprüche, **dadurch gekennzeichnet, dass** sie keine Milchbestandteile umfasst.

4. Emulsionsähnliche Zusammensetzung nach einem der vorhergehenden Ansprüche, **dadurch gekennzeichnet, dass** sie keine Proteine umfasst.

5. Emulsionsähnliche Zusammensetzung nach einem der vorhergehenden Ansprüche, ferner Hydrokolloide umfassend.

6. Emulsionsähnliche Zusammensetzung nach einem der vorhergehenden Ansprüche, ferner mit n-Octenylsuccinat behandelte Stärke umfassend.

7. Emulsionsähnliche Zusammensetzung nach einem der vorhergehenden Ansprüche, die ein Imitationskäse ist.

8. Emulsionsähnliche Zusammensetzung nach einem der vorhergehenden Ansprüche, die ein industriell verarbeiteter Schinken ist.

9. Emulsionsähnliche Zusammensetzung nach einem der vorhergehenden Ansprüche, die eine Imitationspastete ist.

10. Imitationskäse umfassend:
- 20 bis 75 Gew.-% Wasser,
- 5 bis 30 Gew.-% poröse Stärke,
- 1 bis 60 Gew.-% Pflanzenöl,
- 0 bis 15 Gew.-% mit n-Octenylsuccinat behandelter Stärke,
- 0 bis 5 Gew.-% Carrageen,
- 0 bis 5 Gew.-% Galactomannan,
- 0 bis 5 Gew.-% Protein,
- 0 bis 5 Gew.-% Schmelzsalze,
- 0 bis 2 Gew.-% Emulgatoren.

11. Verfahren für die Herstellung der emulsionsähnlichen Zusammensetzung nach einem der Ansprüche 1 - 9, umfassend die Schritte des:
a. Erhaltens essbarer Lipide in flüssiger Form,
b. Einmischens der trockenen Bestandteile in die flüssigen essbaren Lipide,
c. Zusetzens von Wasser,
d. Mischens.

12. Verfahren nach Anspruch 11, ferner eine Hitzebehandlung umfassend.

13. Verpackter Imitationskäse nach den Ansprüchen 7 oder 10.

14. Verwendung poröser Stärke als Proteinersatz.

15. Verwendung poröser Stärke als Emulgatorersatz.

16. Verwendung poröser Stärke für die Herstellung einer emulsionsähnlichen Zusammensetzung nach einem der Ansprüche 1 bis 9.

## Revendications

1. Composition sous la forme d'une émulsion comprenant de l'eau, des agents aromatisants, des lipides alimentaires et de l'amidon poreux.

2. Composition sous la forme d'une émulsion selon la revendication 1, **caractérisée en ce qu'**elle ne comprend pas des émulsifiants.

3. Composition sous la forme d'une émulsion selon l'une quelconque des revendications précédentes, **caractérisée en ce qu'**elle ne comprend pas des ingrédients laitiers.

4. Composition sous la forme d'une émulsion selon l'une quelconque des revendications précédentes, **caractérisée en ce qu'**elle ne contient aucune protéine.

5. Composition sous la forme d'une émulsion selon l'une quelconque des revendications précédentes, **caractérisée en ce qu'**elle comprend également des hydrocolloïdes.

6. Composition sous la forme d'une émulsion selon l'une quelconque des revendications précédentes, **caractérisée en ce qu'**elle comprend également du n-octényl amidon succinaté.

7. Composition sous la forme d'une émulsion selon l'une quelconque des revendications précédentes, à savoir un fromage d'imitation.

8. Composition sous la forme d'une émulsion selon l'une quelconque des revendications précédentes, à savoir un jambon traité.

9. Composition sous la forme d'une émulsion selon l'une quelconque des revendications précédentes, à savoir un pâté d'imitation.

10. Fromage d'imitation comprenant :
- de 20 à 75 % en poids d'eau ;
- de 5 à 30 % en poids d'amidon poreux;
- de 1 à 60 % en poids d'huile végétale ;
- de 0 à 15 % en poids de n-octényl amidon succinaté ;
- de 0 à 5 % en poids de carraghénane ;
- de 0 à 5 % poids de galactomannane ;
- de 0 à 5 % en poids de protéines ;
- de 0 à 5 % en poids de sels émulsionnants ;
- de 0 à 2 % en poids d'émulsifiants.

11. Procédé pour la préparation de la composition sous la forme d'une émulsion selon l'une quelconque des revendications 1 - 9 comprenant les étapes consistant à :
a. obtenir des lipides alimentaires sous forme liquide ;
b. ajouter par mélange les ingrédients secs aux lipides alimentaires liquides ;
c. ajouter de l'eau ;
d. mélanger.

12. Procédé selon la revendication 11, comprenant en outre un traitement thermique.

13. Fromage d'imitation emballé selon les revendications 7 ou 10.

14. Utilisation d'amidon poreux à titre de substitut protéique.

15. Utilisation d'amidon poreux à titre de substitut d'émulsifiants.

16. Utilisation d'amidon poreux pour la préparation d'une composition sous la forme d'une émulsion selon l'une quelconque des revendications 1 à 9.
